## Europäisches Patentamt
## European Patent Office
## Office européen des brevets

(11) Veröffentlichungsnummer: **0 088 044**
**B1**

(12) **EUROPÄISCHE PATENTSCHRIFT**

(45) Veröffentlichungstag der Patentschrift:
19.06.85

(51) Int. Cl.⁴: **B 60 C 27/10, F 16 G 13/18**

(21) Anmeldenummer: 83730026.8

(22) Anmeldetag: 02.03.83

(54) Gleitschutzkette für Fahrzeugreifen.

(30) Priorität: 03.03.82 DE 8206229 U

(43) Veröffentlichungstag der Anmeldung:
07.09.83 Patentblatt 83/36

(45) Bekanntmachung des Hinweises auf die Patenterteilung:
19.06.85 Patentblatt 85/25

(84) Benannte Vertragsstaaten:
AT CH DE FR GB IT LI SE

(56) Entgegenhaltungen:
CH - A - 445 322
US - A - 2 622 651

(73) Patentinhaber: RUD-Kettenfabrik Rieger & Dietz GmbH
u. Co., Friedensinsel, D-7080 Aalen 1 (DE)

(72) Erfinder: Rieger, Hansjörg, Dr. Ing., Saarstrasse 48,
D-7080 Aalen (DE)

(74) Vertreter: Böning, Manfred, Dr. Ing. et al, Patentanwälte
Dipl.-Ing. Dieter Jander Dr. Ing. Manfred Böning
Kurfürstendamm 66, D-1000 Berlin 15 (DE)

BUNDESDRUCKEREI BERLIN

## Beschreibung

Die Erfindung betrifft eine Gleitschutzkette für Fahrzeugreifen mit einer bei montierter Kette gegen die Innenseite des Reifens zur Anlage kommenden inneren Halterung und einer bei montierter Kette gegen die Außenseite des Reifens zur Anlage kommenden äußeren Halterung, sowie mit von der inneren und äußeren Halterung gehaltenen, Teile eines Laufnetzes bildenden Kettenstrangabschnitten, bei der die innere Halterung von einem über den Reifen stülpbaren Federstahlbügel gebildet wird, dessen Enden mit einem Spannkettenstrang in Verbindung stehen, der bei montierter Kette einen zum Verbinden der Enden des Federstahlbügels dienenden ersten Abschnitt, einen zwischen der inneren und äußeren Halterung gelegenen zweiten Abschnitt und einen durch eine Durchziehöffnung eines im Bereich der äußeren Halterung angeordneten Bauteiles ziehbaren dritten Abschnitt aufweist, dessen Ende an der äußeren Halterung befestigbar ist.

Eine Gleitschutzkette der vorstehenden Art ist aus der DE-GMS 81 08 431 bekannt. Bei der bekannten Gleitschutzkette verläuft der Spannkettenstrang von einer Anschlußöse im Bereich der inneren Halterung zu einer ersten Umlenkung und anschließend von dieser zurück zu einer in unmittelbarer Nähe der Anschlußöse gelegenen zweiten Umlenkung, die ihn in den Bereich des Laufnetzes führt. Der erste Abschnitt des Spannkettenstranges der bekannten Gleitschutzkette ist mit anderen Worten als einfacher Flaschenzug ausgebildet. Wie die Erfahrung gezeigt hat, kann es unter ungünstigen Bedingungen passieren, daß der Spannkettenstrang bei der Montage der Gleitschutzkette an der vom Benutzer nicht einsehbaren Innenseite des Reifens eine unerwünschte Schlinge bildet, die das einwandfreie Nachvornziehen des Spannkettenstranges verhindert. Der Benutzer der Gleitschutzkette glaubt, daß diese einwandfrei montiert ist und nimmt das Fahrzeug in Betrieb. Während des Betriebes kann es dann zur selbsttätigen Auflösung der Schlinge kommen, was zwangsläufig zu einer Lockerung des Spannkettenstranges und der Gleitschutzkette als Ganzer führt. Es besteht die Gefahr, daß die Gleitschutzkette vom Reifen abläuft.

Der Erfindung liegt die Aufgabe zugrunde, die angedeutete Gefahr auszuschalten, indem sie die Voraussetzungen dafür schafft, daß der Benutzer der Gleitschutzkette deren einwandfreie Montage überprüfen kann. Diese Aufgabe wird erfindungsgemäß dadurch gelöst, daß zwischen dem zweiten und dritten Abschnitt des Spannkettenstranges mindestens ein von den übrigen Gliedern des Spannkettenstranges abweichendes Markierungsglied angeordnet ist, das bei einwandfrei montierter Kette auf der dem dritten Abschnitt zugewandten Seite der Durchziehöffnung des Bauteiles liegt.

Bei der erfindungsgemäßen Gleitschutzkette ermöglicht es das durch die Durchziehöffnung gezogene Markierungsglied dem Benutzer, zu erkennen, daß der Spannkettenstrang auf der Innenseite des Reifens keine Schlinge gebildet hat, sondern seine richtige Lage einnimmt, d. h. daß die Gleitschutzkette einwandfrei montiert ist.

Vorzugsweise ist das Markierungsglied mit einer Farbmarkierung versehen und als Stegglied ausgebildet.

Die Erfindung wird im folgenden anhand zweier in der beigefügten Zeichnung dargestellter Ausführungsbeispiele näher erläutert. Es zeigt

Fig. 1 eine Ausführungsform mit mehreren Markierungsgliedern und

Fig. 2 eine Ausführungsform mit einem einzelnen Markierungsglied.

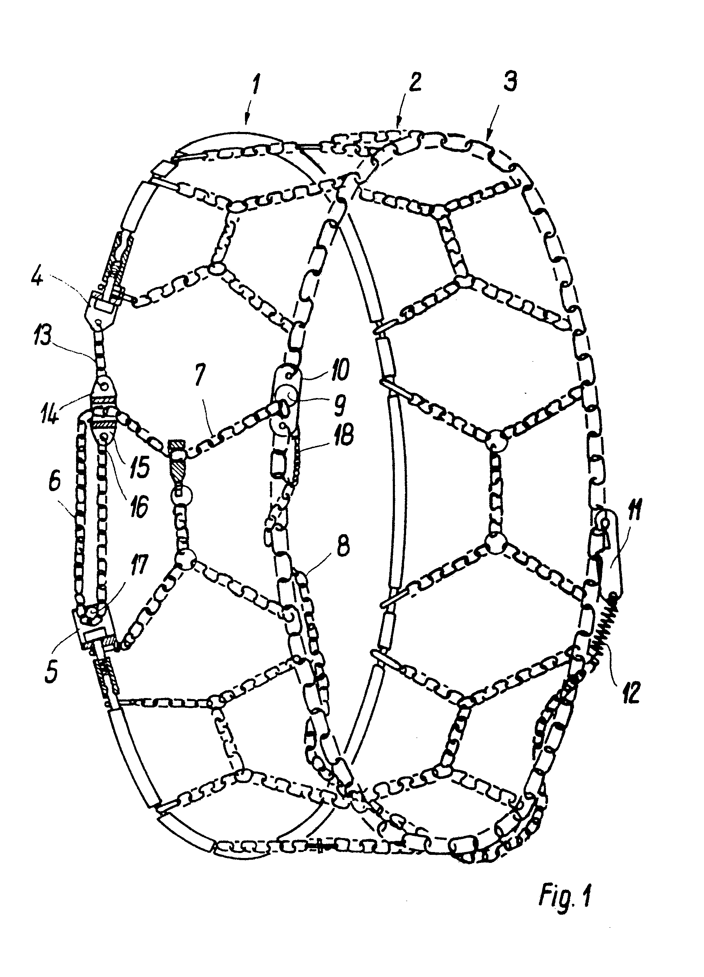

In Fig. 1 ist 1 die innere Halterung für das Kettennetz 2 einer Gleitschutzkette, deren äußere Halterung 3 von einer durchgehenden geschlossenen Seitenkette gebildet wird. Die innere Halterung 1 besteht aus einem Federstahlbügel, der mit Endteilen 4 und 5 versehen ist, die einen Abstand voneinander haben, der in der Größenordnung von 10 — 25% der Länge des Federstahlbügels liegt. Die Endteile 4 und 5 der inneren Halterung 1 werden von einem Spannkettenstrang überbrückt, der aus einem im Bereich der inneren Halterung 1 gelegenen ersten Abschnitt 6, einem zwischen der inneren und der äußeren Halterung gelegenen zweiten Abschnitt 7 und einem dritten Abschnitt 8 besteht. Der dritte Abschnitt 8 ist durch die im wesentlichen schlüssellochförmige Durchziehöffnung 9 eines Sperrelementes 10 im Bereich der äußeren Halterung 3 ziehbar. Am Ende des dritten Abschnittes 8 befindet sich ein Verwahrungshaken 11, der an einer geeigneten Stelle der äußeren Halterung verankert ist. Zwischen dem Verwahrungshaken 11 und dem übrigen Teil des dritten Abschnittes 8 des Spannstranges ist ein elastisches Zwischenstück angeordnet.

Die Endteile 4 und 5 sind um 360° drehbar an der inneren Halterung 1 gelagert. Aufgrund ihrer Drehbarkeit ist ein Wenden des Kettennetzes 2 möglich. Mit dem Endteil 4 ist über mindestens ein gegenüber der inneren Halterung 1 bewegliches Verbindungselement 13 eine von einer Gleithülse gebildete Umlenkung 14 verbunden. Die Umlenkung 14 besitzt eine Anschlußöse 15, in die das dem freien Ende des Spannkettenstranges abgewandte Spannkettenstrangende 16 eingehängt ist. Der Spannkettenstrangabschnitt 6 verläuft von der Anschlußöse 15, der Umlenkung 14 zum Endteil 5. Er wird dort durch eine zweite Umlenkung 17, die von einer Rolle oder einem Zapfen gebildet wird, umgelenkt und zur Umlenkung 14 zurückgeführt, von der der Spannkettenstrang über die Lauffläche zur äußeren Halterung 3 verläuft.

Beim Montieren der Gleitschutzkette wird die innere Halterung 1 aufgespreizt. Dies bedeutet, daß Teile des zweiten Abschnittes 7 und gegebenenfalls auch Teile des dritten Abschnittes 8 des Spannkettenstranges die Umlenkung 14 passieren und vorübergehend in den Bereich der inneren Halterung 1 gelangen. Sobald die innere Halterung 1 über den Reifen gestülpt ist, federt sie in ihre Ausgangslage zurück. Hierbei kann es zur unerwünschten Schlingenbildung im Bereich der inneren Halterung 1 kommen.

Um dem Benutzer der Kette eine Schlingenbildung erkennbar zu machen, ist der Spannkettenstrang im Bereich des Überganges zwischen dem zweiten Abschnitt 7 und dem dritten Abschnitt 8 mit mehreren Markierungsgliedern 18 versehen, deren Abmessungen kleiner sind als die Abmessungen der übrigen Glieder des Spannkettenstranges.

In der Zeichnung befinden sich die Markierungsglieder 18 in unmittelbarer Nähe des Bauteiles 10. Es ist dies die Position, die die Markierungsträger bei neuem Reifen und unverschlissener Kette einnehmen. Bei abgefahrenem Reifen und/oder verschlissener Kette kann sich der Abstand der Markierungsträger 18 vom Bauteil 13 vergrößern. In jedem Fall muß jedoch mindestens ein Markierungsträger 18 durch die Durchziehöffnung hindurchgezogen sein.

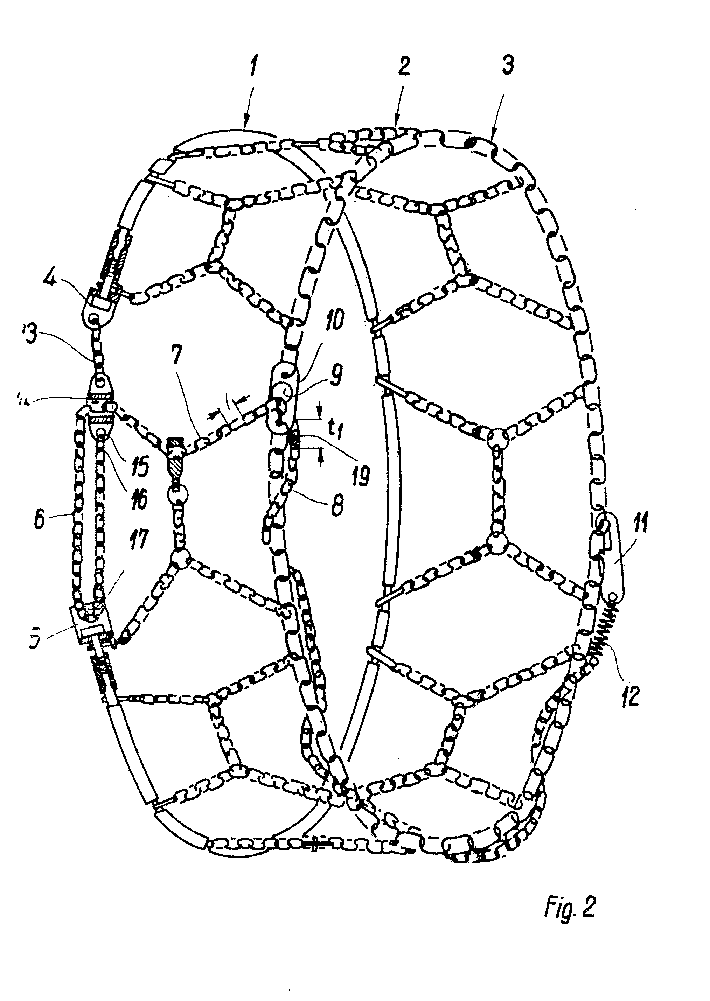

Das in Fig. 2 dargestellte Ausführungsbeispiel entspricht weitgehend dem Ausführungsbeispiel gemäß Fig. 1. Für gleiche Teile wurden daher die gleichen Bezugszeichen verwendet. Der Unterschied zwischen den beiden Konstruktionen besteht darin, daß bei der Gleitschutzkette gemäß Fig. 2 ein einzelnes, als Stegglied ausgebildetes Markierungsglied 19 Verwendung findet. Die Teilung t₁ dieses Markierungsgliedes ist größer als die Teilung t₀ der übrigen Kettenglieder des Spannkettenstranges.

Als besonders vorteilhaft erweist es sich, wenn die Markierungsglieder 18 bzw. das Markierungsglied 19 zusätzlich eine Farbmarkierung tragen.

## Patentansprüche

1. Gleitschutzkette für Fahrzeugreifen mit einer bei montierter Kette gegen die Innenseite des Reifens zur Anlage kommenden inneren Halterung (1) und einer bei montierter Kette gegen die Außenseite des Reifens zur Anlage kommenden äußeren Halterung (3), sowie mit von der inneren und äußeren Halterung gehaltenen, Teile eines Laufnetzes bildenden Kettenstrangabschnitten, bei der die innere Halterung von einem über den Reifen stülpbaren Federstahlbügel gebildet wird, dessen Enden (4, 5) mit einem Spannkettenstrang in Verbindung stehen, der bei montierter Kette einen zum Verbinden der Enden des Federstahlbügels dienenden ersten Abschnitt (6), einen zwischen der inneren und äußeren Halterung gelegenen zweiten Abschnitt (7) und einen durch eine Durchziehöffnung (9) eines im Bereich der äußeren Halterung angeordneten Bauteiles (10) ziehbaren dritten Abschnitt (8) aufweist, dessen Ende (11) an der äußeren Halterung befestigbar ist, dadurch gekennzeichnet, daß zwischen dem zweiten und dritten Abschnitt des Spannkettenstranges (6, 7, 8) mindestens ein von den übrigen Gliedern des Spannkettenstranges (6, 7, 8) abweichendes Markierungsglied (18, 19) angeordnet ist, das bei einwandfrei montierter Kette auf der dem dritten Abschnitt (8) zugewandten Seite der Durchziehöffnung (9) des Bauteiles (10) liegt.

2. Gleitschutzkette nach Anspruch 1, dadurch gekennzeichnet, daß das Markierungsglied (18, 19) eine Farbmarkierung trägt.

3. Gleitschutzkette nach Anspruch 1 oder 2, dadurch gekennzeichnet, daß das Markierungsglied (19) als Stegglied ausgebildet ist.

## Claims

1. Anti-skid chain for vehicle tyres having an internal support means (1) coming into contact with the inside of the tyre when the chain is fitted, and having an external support means (3) coming into contact with the outside of the tyre when the chain is fitted, also having chain strand sections forming parts of a tread net and retained by the internal and external support means, wherein the internal support means is formed by a spring wire bracket fitted over the tyre, the ends (4, 5) of which are in communication with a tensioning chain strand, which exhibits, when the chain is fitted, a first section (6) serving to connect the ends of the spring steel bracket, a second section (7) located between the internal and external support means, and a third section (8) adapted to be pulled through a pull-through aperture (9) of a component (10) arranged in the region of the external support means, the end (11) of which is attachable to the external support means, characterised in that at least one marking element (18, 19) differing from the remaining elements of the tensioning chain strand (6, 7, 8) and located on that side of the pull-through aperture (9) of the component (10) facing the third section (8) when the chain is correctly fitted, is arranged between the second and third sections of the tensioning chain strand (6, 7, 8).

2. Anti-skid chain according to Claim 1, characterised in that the marking element (18, 19) carries a colour marking.

3. Anti-skid chain according to Claim 1 or 2, characterised in that the marking element (19) is constructed as a strap element.

## Revendications

1. Chaîne antidérapante pour pneumatiques d'automobiles, comportant une attache intérieure (1) reposant, lorsque la chaîne est montée, sur la partie intérieure du pneumatique et une attache extérieure (3) reposant, lorsque la chaîne est montée, sur la partie extérieure du pneumatique, ainsi que des tronçons de chaîne maintenus par les attaches extérieure et intérieure formant un cercle de roulement, pour laquelle l'attache intérieure est formée par un étrier en acier à ressort retroussable sur le pneumatique et dont les extrémités (4, 5) sont en relation avec un tronçon de chaîne tendeur qui présente, lorsque la chaîne est montée, une première section (6) servant à relier les extrémités de l'étrier en acier à ressort, une seconde section (7) placée entre l'attache extérieure et l'attache intérieure et une troisième section (8) pouvant être introduite à travers l'ouverture d'étirage (9) d'un élément (10) situé dans la zone de l'attache extérieure et dont l'extrémité (11) peut être fixée à l'attache extérieure, caractérisée en ce qu'au moins un maillon de marquage (18, 19) différent des autres maillons du tronçon de chaîne tendeur (6, 7, 8) est placé entre la seconde et la troisième section du tronçon de chaîne tendeur (6, 7, 8), et se trouve, lorsque la chaîne est correctement montée sur la face de l'ouverture d'étirage (9) de l'élément (10), tournée vers la troisième section (8).

2. Chaîne antidérapante suivant la revendication 1, caractérisée en ce que le maillon de marquage (18, 19) porte une marque de couleur.

3. Chaîne antidérapante suivant la revendication 1 ou 2, caractérisée en ce que le maillon de marquage (19) a la forme d'un maillon de fixation.

Fig. 1

*Fig. 2*